# EUROPÄISCHE PATENTSCHRIFT

(11) **EP 3 205 539 B1**
(45) Veröffentlichungstag und Bekanntmachung des Hinweises auf die Patenterteilung: **17.07.2019**
(21) Anmeldenummer: 17152881.3
(22) Anmeldetag: 24.01.2017
(51) Int. Cl.: B60W 10/08, B60W 10/26, B60W 20/00, B60W 20/13, B60W 50/00, H02J 7/14, B60W 30/182

(54) **VERFAHREN ZUM BETREIBEN EINES HYBRIDANTRIEBS EINES FAHRZEUGS SOWIE FAHRZEUG MIT EINEM HYBRIDANTRIEB**
METHOD FOR OPERATING A HYBRID DRIVE OF A VEHICLE AND VEHICLE COMPRISING A HYBRID DRIVE
PROCÉDÉ DE FONCTIONNEMENT D'UNE PROPULSION HYBRIDE D'UN VÉHICULE AUTOMOBILE ET VÉHICULE AUTOMOBILE ÉQUIPÉ D'UNE PROPULSION HYBRIDE

(30) Priorität: 11.02.2016 DE 102016202058
(43) Veröffentlichungstag der Anmeldung: 16.08.2017
(73) Patentinhaber: VOLKSWAGEN AKTIENGESELLSCHAFT, 38440 Wolfsburg (DE)
(72) Erfinder: Mann, Andreas, 38102 Braunschweig (DE); Fischer, Viktor, 38518 Gifhorn-Gamsen (DE); Becker, Bernd, 38550 Isenbüttel (DE)

(56) Entgegenhaltungen:
- DE-A1- 10 324 948
- DE-A1-102007 036 665
- DE-A1-102012 208 462

## Beschreibung

Die vorliegende Erfindung betrifft ein Verfahren zum Betreiben eines Hybridantriebs eines Fahrzeugs, der Hybridantrieb aufweisend einen Verbrennungsmotor und eine Elektromaschine, wobei die Elektromaschine gemäß einer Drehmomentanforderung des Hybridantriebs zumindest in einem Generatorbetrieb und einem Motorbetrieb betrieben wird, wobei ferner die Elektromaschine mit einem Traktionsspeicher, der zum Speichern und Bereitstellen elektrischer Energie für die Elektromaschine ausgebildet ist, in einem elektrischen Traktionsnetz elektrisch gekoppelt ist, wobei ferner das Traktionsnetz mit einem Bordnetz des Fahrzeugs direkt parallel zu einem Gesamtnetz geschaltet ist, und wobei im Bordnetz eine Vielzahl weiterer elektrischer Fahrzeugkomponenten elektrisch gekoppelt ist. Ferner betrifft die Erfindung ein Fahrzeug mit einem Hybridantrieb, der Hybridantrieb aufweisend einen Verbrennungsmotor und eine Elektromaschine, wobei die Elektromaschine gemäß einer Drehmomentanforderung des Hybridantriebs zumindest in einem Generatorbetrieb und einem Motorbetrieb betreibbar ist, wobei ferner die Elektromaschine mit einem Traktionsspeicher, der zum Speichern und Bereitstellen elektrischer Energie für die Elektromaschine ausgebildet ist, in einem elektrischen Traktionsnetz elektrisch gekoppelt ist, das mit dem Bordnetz des Fahrzeugs direkt parallel zu einem Gesamtnetz geschaltet ist, und wobei im Bordnetz eine Vielzahl weiterer elektrischer Fahrzeugkomponenten elektrisch gekoppelt ist.

Hybridfahrzeuge, die zum Antreiben sowohl einen Verbrennungsmotor als auch einen Elektromotor aufweisen, sind in der modernen Fahrzeugtechnik bekannt. Dabei ist es insbesondere auch bekannt, beide Motorkomponenten gleichzeitig zu betreiben und eine Drehmomentanforderung, die beispielsweise von einem Benutzer des Fahrzeugs vorgegeben wird, auf die beiden Antriebe zu verteilen. Dabei ist insbesondere auch bekannt, beispielsweise aus der DE 10 2009 038 553 A1, diese Verteilung der Drehmomentanforderung angepasst vorzunehmen, beispielsweise die Verteilung an tatsächlich durch den Verbrennungsmotor an die angetriebenen Räder lieferbaren beziehungsweise gelieferten Drehmomente anzupassen.

In Hybridfahrzeugen gemäß dem Stand der Technik werden diese Drehmomentanforderungen an die Elektromaschine gesendet. Diese kann jedoch zumeist eine Drehmomentanforderung nicht direkt bearbeiten und wird daher basierend auf beispielsweise einem Ladungszustand eines Traktionsspeichers und entsprechend der Drehmomentanforderung angesteuert. Einflüsse eines Betriebs der Elektromaschine, beispielsweise auf ein Spannungsniveau eines Traktionsnetzes in der die Elektromaschine angeordnet ist, bleiben dabei zumeist unberücksichtigt. Insbesondere bei Hybridfahrzeugen, in denen das Traktionsnetz, in der die Elektromaschine und ein Traktionsspeicher elektrisch angeordnet und gekoppelt sind, und ein Bordnetz, in dem eine Vielzahl weiterer elektrischer Fahrzeugkomponenten elektrisch gekoppelt ist, direkt parallel zu einem elektrischen Gesamtnetz geschaltet sind, kann dies zu Problemen führen, da beispielsweise ein sicheres Betreiben dieser Verbraucher im Bordnetz oftmals ein minimales Spannungsniveau voraussetzt und zum Beispiel ein Schutz vor Zerstörung durch ein maximales Spannungsniveau gewährleistet werden soll. Diese Problematik und mögliche Lösungen sind beispielsweise aus der DE 10 2012 208 462 A1 und der DE 103 24 948 A1 bekannt.

Es ist daher Aufgabe der vorliegenden Erfindung, die voranstehend beschriebenen Nachteile zumindest teilweise zu beheben. Insbesondere ist es Aufgabe der Erfindung, ein Verfahren zum Betreiben eines Hybridantriebs eines Fahrzeugs sowie ein Fahrzeug mit einem Hybridantrieb bereitzustellen, die in besonders einfacher und kostengünstiger Weise eine Bereitstellung eines Drehmoments unter gleichzeitiger Berücksichtigung einer Sicherheit eines elektrischen Gesamtnetzes des Hybridfahrzeugs ermöglichen.

Voranstehende Aufgabe wird gelöst durch ein Verfahren zum Betreiben eines Hybridantriebs eines Fahrzeugs mit den Merkmalen des unabhängigen Anspruchs 1. Ferner wird die Aufgabe gelöst durch ein Fahrzeug mit den Merkmalen des nebengeordneten Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Verfahren zum Betreiben eines Hybridantriebs eines Fahrzeugs, der Hybridantrieb aufweisend einen Verbrennungsmotor und eine Elektromaschine, wobei die Elektromaschine gemäß einer Drehmomentanforderung des Hybridantriebs zumindest in einem Generatorbetrieb und einem Motorbetrieb betrieben wird, wobei ferner die Elektromaschine mit einem Traktionsspeicher, der zum Speichern und Bereitstellen elektrischer Energie für die Elektromaschine ausgebildet ist, in einem elektrischen Traktionsnetz elektrisch gekoppelt ist, wobei ferner das Traktionsnetz mit einem Bordnetz des Fahrzeugs direkt parallel zu einem Gesamtnetz geschaltet ist, und wobei im Bordnetz eine Vielzahl weiterer elektrischer Fahrzeugkomponenten elektrisch gekoppelt ist. Ein erfindungsgemäßes Verfahren ist dadurch gekennzeichnet, dass durch eine Kontrolleinheit des Hybridantriebs ein durch die Elektromaschine im Generatorbetrieb bereitstellbares minimales und im Motorbetrieb bereitstellbares maximales Drehmoment ermittelt wird, das für den Generatorbetrieb durch die Kontrolleinheit die Elektromaschine zur Erfüllung der Drehmomentanforderung, basierend auf einer Spannungsvorgabe für das Gesamtnetz, betrieben wird, und dass für den Motorbetrieb durch die Kontrolleinheit die Elektromaschine zur Erfüllung der Drehmomentanforderung basierend auf einer Stromvorgabe betrieben wird, wobei ferner jeweils das ermittelte, durch die Elektromaschine bereitstellbare minimale und/oder maximale Drehmoment berücksichtigt wird.

Durch ein erfindungsgemäßes Verfahren kann ein Hybridantrieb eines Fahrzeugs betrieben werden. Insbesondere kann durch ein erfindungsgemäßes Verfahren eine Drehmomentanforderung auf eine Elektromaschine und einen Verbrennungsmotor des Hybridantriebs verteilt werden. Die Elektromaschine kann dabei insbesondere in einem Generatorbetrieb, in der die Elektromaschine Bewegungsenergie des Fahrzeugs in elektrische Energie umwandelt, und in einen Motorbetrieb, in dem die Elektromaschine elektrische Energie in Bewegungsenergie für das Fahrzeug umwandelt, betrieben werden. Zum Betreiben der Elektromaschine ist diese in einem elektrischen Traktionsnetz elektrisch gekoppelt, wobei insbesondere im elektrischen Traktionsnetz ein elektrischer Traktionsspeicher, der zum Speichern und Bereitstellen elektrischer Energie ausgebildet ist, angeordnet ist. Dieses Traktionsnetz ist ferner mit einem Bordnetz des Fahrzeugs zu einem Gesamtnetz direkt parallel geschaltet. Diese Parallelschaltung hat dabei insbesondere zur Folge, dass dadurch ein Spannungsniveau im Traktionsnetz und im Bordnetz zumindest im Wesentlichen gleich ist, wodurch vorteilhafterweise für beide Teilnetze des Gesamtnetzes ähnliche bzw. sogar identische elektrische Komponenten eingesetzt werden können. Im Bordnetz sind dabei, insbesondere neben einem Bordnetzspeicher, eine Vielzahl weiterer elektrischer Fahrzeugkomponenten elektrisch gekoppelt, beispielsweise eine Lichtanlage, ein Anlasser und/oder Unterstützungsvorrichtungen beispielsweise für eine Lenkung oder eine Bremsanlage des Fahrzeugs.

Ein erfindungsgemäßes Verfahren ist dadurch gekennzeichnet, dass für eine Ansteuerung der Elektromaschine eine Spannungsvorgabe bzw. eine Stromvorgabe verwendet wird. Dabei wird die Spannungsvorgabe in Situationen verwendet, in denen die Elektromaschine als Generator betrieben wird. In einem derartigen Generatorbetrieb wandelt die Elektromaschine als Generator Bewegungsenergie des Fahrzeugs in elektrische Energie um. Dabei kann über Einstellungen der Elektromaschine direkt gesteuert werden, welches Spannungsniveau von der Elektromaschine im Generatorbetrieb erzeugt wird. Dies ist insbesondere vorteilhaft, da eine besonders gute Aufladung des Traktionsspeichers einen möglichst großen Spannungsunterschied zwischen dem Generator und einer Leerlaufspannung des Traktionsspeichers voraussetzt. Durch eine Spannungsvorgabe beim Generatorbetrieb kann dieser Spannungsunterschied besonders einfach eingestellt werden. Entgegengesetzt dazu wird eine Stromvorgabe verwendet, wenn die Elektromaschine im Motorbetrieb betrieben werden soll. Im Motorbetrieb, in dem die Elektromaschine als Elektromotor betrieben wird, wandelt die Elektromaschine elektrische Energie in Bewegungsenergie um, mit der das Fahrzeug angetrieben wird beziehungsweise werden soll. Dabei ist das durch die Elektromaschine bereitstellbare Drehmoment direkt von einem Strom abhängig, der in der Elektromaschine verbraucht wird. Durch eine Stromvorgabe kann somit direkt über eine elektrische Größe das durch die Elektromaschine bereitzustellende Drehmoment eingestellt werden. Gemäß der Erfindung wird bei einem erfindungsgemäßen Verfahren diese Ansteuerung der Elektromaschine durch eine Spannungsvorgabe bzw. eine Stromvorgabe eingebettet in die Vorgabe der Erfüllung einer Drehmomentanforderung an die Elektromaschine. Insbesondere wird dabei durch eine Kontrolleinheit ein durch die Elektromaschine bereitstellbares minimales bzw. maximales Drehmoment ermittelt, wobei das minimale Drehmoment als Bremsmoment im Generatorbetrieb und das maximale Drehmoment als Antriebsmoment im Motorbetrieb durch die Elektromaschine bereitstellbar ist. In diese minimalen bzw. maximalen bereitstellbaren Drehmomente können dabei insbesondere durch die Kontrolleinheit auch Grenzen einer Leistungsfähigkeit des gesamten elektrischen Systems, insbesondere sowohl des Traktionsnetzes und der darin verbauten Komponenten als auch des Bordnetzes und der darin verbauten Komponenten, berücksichtigt werden. Auf diese Weise kann eine Sicherheit beim Betreiben, insbesondere auch des Bordnetzes und der darin verbauten Verbraucher gewährleistet werden.

Zusammenfassend kann somit durch ein erfindungsgemäßes Verfahren eine Elektromaschine eines Hybridantriebs eines Fahrzeugs basierend auf Drehmomentanforderungen betrieben werden, wobei insbesondere eine Ansteuerung der Elektromaschine durch elektrische Größen, insbesondere eine Spannungsvorgabe und eine Stromvorgabe, vorgenommen wird und wobei Leistungsgrenzen des gesamten Systems, insbesondere auch eines parallel zu einem Traktionsnetz geschalteten Bordnetzes, bei der Ansteuerung der Elektromaschine berücksichtigt werden können. Eine besonders gute und nachhaltige Erfüllung der Drehmomentanforderung und gleichzeitig eine Sicherstellung einer Betriebssicherheit der verbauten elektronischen Netze, insbesondere des Traktionsnetzes und des Bordnetzes, können dadurch ermöglicht werden.

Dabei kann gemäß eines erfindungsgemäßen Verfahrens ferner vorgesehen sein, dass die Spannungsvorgabe unter Berücksichtigung zumindest einer der folgenden Größen festgelegt wird:
- Maximalspannung
- Minimalspannung
- maximaler Ladestrom
- gemessene Spannung
- gemessener Strom
- Ladungszustand des Traktionsspeichers
- Drehmomentanforderung an die Elektromaschine, insbesondere aufgrund eines Ladebedarfs des Traktionsspeichers
- Drehzahl der Elektromaschine

Dabei ist diese Liste insbesondere nicht abgeschlossen, so dass auch weitere Größen, soweit sinnvoll und notwendig, zur Festlegung der Spannungsvorgabe verwendet werden können. Die Spannungsvorgabe wird dabei insbesondere verwendet, um die Elektromaschine im Generatorbetrieb anzusteuern. So kann beispielsweise zur Ermittlung der Spannungsvorgabe aus einer gemessenen Spannung und einem gemessenen Strom eine derzeitig mögliche elektrische Leistung im Traktionsnetz berechnet werden. Aus einer Drehmomentanforderung, die insbesondere aufgrund eines Ladebedarfs des Traktionsspeichers ermittelt werden kann, und einer möglichen Drehzahl der Elektromaschine kann ebenfalls insbesondere unter Berücksichtigung eines Ladekennfelds des Traktionsspeichers, eine mögliche durch die in der Elektromaschine bereitstellbare elektrische Leistung im Generatorbetrieb berechnet werden. In diese mögliche bereitstellbare elektrische Leistung können dabei auch Verluste, beispielsweise im Traktionsnetz, mit einbezogen und einberechnet werden. Aus dem Unterschied der möglichen elektrischen Generatorleistung und der bei der derzeit vorhandenen Spannung tatsächlich vorhandenen elektrischen Leistung im Traktionsnetz kann dann die Spannungsvorgabe für den Betrieb der Elektromaschine als Generator berechnet werden, wobei hier auch eine Minimalspannung, die beispielsweise für einen sicheren Betrieb weiterer elektrischer Komponenten im Gesamtnetz benötigt wird, berücksichtigt werden kann. Eine besonders direkte Ansteuerung der Elektromaschine durch eine elektrische Größe kann dadurch bereitgestellt werden.

Ferner kann ein erfindungsgemäßes Verfahren dahin gehend ausgebildet sein, dass die Stromvorgabe unter Berücksichtigung zumindest einer der folgenden Größen festgelegt wird:
- gemessene Spannung
- Minimalspannung
- maximaler Entladestrom
- Ladungszustand des Traktionsspeichers
- Drehmomentanforderung an die Elektromaschine, insbesondere aufgrund einer Entladeanforderung an den Traktionsspeicher
- Drehzahl der Elektromaschine
- Temperatur der Elektromaschine

Dabei ist diese Liste nicht abgeschlossen, so dass auch weitere Größen, soweit sinnvoll und notwendig, zur Festlegung der Stromvorgabe verwendet werden können. Über die Stromvorgabe wird dabei die Elektromaschine im Motorbetrieb betrieben, wobei die festgelegte Stromvorgabe dabei direkt das durch die Elektromaschine im Motorbetrieb bereitstellbare Drehmoment bestimmt. Um diese Stromvorgabe festzulegen, kann beispielsweise unter Berücksichtigung eines Entladekennfelds des Traktionsspeichers aus einer Drehmomentanforderung an die Elektromaschine, die insbesondere aufgrund einer Entladeanforderung an den Traktionsspeicher ermittelt werden kann, und einer derzeitigen Drehzahl der Elektromaschine die dafür benötigte elektrische Leistung ermittelt werden. Eine Temperatur der Elektromaschine kann ebenfalls berücksichtigt werden, beispielsweise um eine Beschädigung insbesondere durch Überhitzung der Elektromaschine zu verhindern. Bei der Ermittlung dieser elektrischen Leistung können selbstverständlich auch hier mögliche Verluste mit einbezogen werden. Aus der so ermittelten elektrischen Leistung kann zusammen mit einer derzeitig anliegenden gemessenen Spannung im Traktionsnetz der für die Erfüllung der Drehmomentanforderung nötige Strom berechnet werden. Dieser nötige Strom kann dann als Stromvorgabe an die Elektromaschine übermittelt werden, die dann im Betrieb ein Drehmoment bereitstellen kann, das die Drehmomentanforderung erfüllt. Insgesamt kann somit eine Elektromaschine des Hybridantriebs direkt durch eine elektrische Größe, insbesondere durch einen Strom, angesteuert werden, um eine Drehmomentanforderung zu erfüllen.

Ferner kann ein erfindungsgemäßes Verfahren dahin gehend ausgebildet sein, dass für eine Ermittlung des durch die zumindest eine Elektromaschine bereitstellbaren minimalen und/oder maximalen Drehmoments zumindest eine der folgenden Größen verwendet wird:
- Maximalspannung
- Minimalspannung
- maximaler Ladestrom
- maximaler Entladestrom
- gemessene Spannung
- Drehzahl der Elektromaschine

Auch diese Liste ist dabei nicht abgeschlossen, so dass auch weitere Größen, soweit sinnvoll und notwendig, für die Ermittlung des bereitstellbaren minimalen und/oder maximalen Drehmoments verwendet werden können. Insbesondere durch die Ermittlung dieses minimalen und/oder maximalen Drehmoments und die Berücksichtigung dieser Informationen bei der Festlegung der Spannungs- bzw. Stromvorgabe kann eine Ansteuerung der Elektromaschine und gleichzeitig eine Sicherheit für das Gesamtnetz sichergestellt werden. Dabei kann insbesondere ein minimales, durch die Elektromaschine bereitstellbares Drehmoment in einem Generatorbetrieb der Elektromaschine auftreten. Dieses minimale bereitstellbare Drehmoment ist somit bevorzugt einer Bewegungsrichtung des Fahrzeugs entgegengesetzt. Um dieses minimale Drehmoment zu ermitteln, kann beispielsweise aus einem maximalen Ladestrom und einer maximalen Spannung eine maximale elektrische Generatorleistung als eine Leistungsgrenze des elektrischen Systems, insbesondere des Traktionsnetzes und/oder des Bordnetzes, ermittelt werden. In diese Leistungsgrenze kann insbesondere auch eine mögliche Verlustleistung mit einbezogen werden. Des Weiteren kann bei der Ermittlung des minimalen Drehmoments auch eine Drehzahl der Elektromaschine berücksichtigt werden, die ebenfalls ein minimal bereitstellbares Drehmoment begrenzt. Zur Ermittlung eines maximal bereitstellbaren Drehmoments, das insbesondere durch die Elektromaschine in einem Motorbetrieb bereitgestellt werden kann, kann eine maximale Motorleistung der Elektromaschine berechnet werden. Dafür können insbesondere eine Minimalspannung, die beispielsweise für einen sicheren Betrieb weiterer elektrischer Komponenten im Gesamtnetz benötigt wird, und ein maximaler Entladestrom herangezogen werden, um eine maximal in der Elektromaschine verbrauchbare elektrische Leistung zu ermitteln. Auch bei der Ermittlung dieser maximalen elektrischen Leistung können Verluste berücksichtigt werden. Zusammen mit einer maximalen Drehzahl der Elektromaschine, die ebenfalls eine Begrenzung des maximal bereitstellbaren Moments darstellt, kann insgesamt das maximal durch die Elektromaschine bereitstellbare Drehmoment ermittelt werden. Zusammenfassend können insbesondere durch die Berücksichtigung der elektrischen Größen, insbesondere eines Lade- bzw. Entladestroms und einer maximalen bzw. minimalen Spannung, Eigenschaften des Traktions- bzw. des Gesamtnetzes für die Ermittlung des minimalen und/oder maximalen bereitstellbaren Drehmoments bereitgestellt werden. Auch dadurch kann eine Sicherheit beim Betreiben des Hybridantriebs, insbesondere hinsichtlich einer Betriebssicherheit des elektrischen Gesamtnetzes, gewährleistet werden.

Darüber hinaus kann bei einem erfindungsgemäßen Verfahren vorgesehen sein, dass der Hybridantrieb durch eine Kontrolleinheit in verschiedenen Betriebsstrategien, insbesondere in einem Segelbetrieb und/oder in einem Boostbetrieb, betrieben wird, wobei eine Freigabe der Betriebsstrategien basierend auf einer Prädiktion eines Spannungsverlaufs im Gesamtnetz, insbesondere anhand von das Gesamtnetz beschreibenden elektrischen Größen, vorgenommen wird. Eine derartige Kontrolleinheit kann dabei insbesondere separat im Hybridantrieb vorgesehen sein und/oder in ein übergeordnetes Fahrzeugkontrollsystem integriert sein. Eine Prädiktion des Spannungsverlaufs ist dabei insbesondere eine Vorhersage, wie sich der Spannungsverlauf bei Verwendung der jeweiligen Betriebsstrategie verhalten und/oder verändern wird. Diese Prädiktion kann dabei insbesondere anhand von das Gesamtnetz beschreibenden elektrischen Größen durchgeführt werden. Bevorzugt kann für diese Prädiktion insbesondere ein aktuell vorhandener Bordnetzstrom ausgewertet werden. Eine Freigabe der Betriebsstrategie, d. h., die Möglichkeit einer Ergreifung dieser Betriebsstrategie, wird dann erfolgen, wenn die Betriebsstrategie durch die derzeitig vorhandenen elektrischen Eigenschaften des Gesamtnetzes möglich ist und/oder wenn diese Betriebsstrategie zusätzlich gemäß der Prädiktion des Spannungsverlaufs auch über eine längere Zeit aufrechterhalten werden kann. Ein Einstellen beziehungsweise Durchführen von Betriebsstrategien, die derzeitig oder in naher Zukunft zu Problemen für das Gesamtnetz führen könnten, können so sicher vermieden werden. So kann beispielsweise bei einem Segelbetrieb, bei dem insbesondere bevorzugt sowohl die Elektromaschine als auch der Verbrennungsmotor abgeschaltet werden, berücksichtigt werden, dass am Ende des Segelbetriebs ein Start des Verbrennungsmotors unter Einsatz des motorischen Betriebs Elektromaschine nötig ist. Dieser Start kann zu einem Spannungseinbruch im Traktions- und damit im Bordnetz führen und muss daher bei der Freigabe für die Betriebsstrategie Segelbetrieb berücksichtigt werden. Ein anderes Beispiel ist ein Boostbetrieb, bei dem das Fahrzeug zusätzlich zum Verbrennungsmotor auch von der Elektromaschine angetrieben wird. Dies führt zu einem hohen Stromverbrauch und dadurch ebenfalls zu einem Spannungsabfall im Traktions- und damit im Bordnetz. Auch dieser Spannungsabfall muss bei der Freigabe berücksichtigt werden, um eine Sicherheit beim Betreiben des Bordnetzes bereitstellen zu können.

Gemäß einer bevorzugten Weiterentwicklung eines erfindungsgemäßen Verfahrens kann ferner vorgesehen sein, dass bei der Freigabe der Betriebsstrategien, die Prädiktion des Spannungsverlaufs mit einem auf die jeweilige Betriebsstrategie angepassten Spannungsvorhalt verglichen wird. Ein derartiger Spannungsvorhalt ist dabei insbesondere ein Spannungswert, in dem mögliche Verbrauchswerte von Verbrauchern im Gesamtnetz, insbesondere auch im Bordnetz, mit einbezogen sind. So kann beispielsweise durch einen derartigen Spannungsvorhalt berücksichtigt werden, dass zusätzlich zum Spannungseinbruch am Ende eines Segelbetriebs, wie oben beschrieben, auch Verbraucher im Bordnetz einen Spannungsabfall verursachen können, die gleichzeitig betrieben werden können. Derartige Verbraucher können beispielsweise eine Lichtanlage sein, die zumeist für einen sicheren, störungsfreien Betrieb eine minimale Spannung im Bordnetz benötigt. Dieser zusätzliche Verbrauch kann durch einen Spannungsvorhalt insbesondere des Traktionsspeichers sicher und besonders einfach berücksichtigt werden. So kann in diesem Beispiel insbesondere verhindert werden, dass eine Lichtleistung der Lichtanlage beeinträchtigt wird, wenn am Ende eines Segelbetriebs der Verbrennungsmotor gestartet werden muss.

Ferner kann ein erfindungsgemäßes Verfahren dahin gehend ausgebildet sein, dass eine Verteilung der Drehmomentanforderung auf den Verbrennungsmotor und die Elektromaschine vorgenommen wird, wobei das durch die zumindest eine Elektromaschine bereitstellbare minimale und/oder maximale Drehmoment berücksichtigt wird. Dabei kann diese Verteilung durch die oben beschriebene Kontrolleinheit oder durch eine zusätzliche Kontrolleinheit vorgenommen werden. Auch diese Kontrolleinheit kann dabei separat vorgesehen und/oder in ein übergeordnetes Fahrzeugkontrollsystem integriert sein. Durch die Berücksichtigung der durch die Elektromaschine bereitstellbaren minimalen und/oder maximalen Drehmomente kann eine noch bessere Verteilung der Drehmomentanforderung auf die Elektromaschine und den Verbrennungsmotor vorgenommen werden. Drehmomentanforderungen, die durch die Elektromaschine nicht erfüllt werden können und/oder die zu einer Überschreitung beziehungsweise Unterschreitung zulässiger Spannungswerte im Traktions-, Bord- und/oder Gesamtnetz führen würden, können auf diese Weise vermieden werden. Ein noch sicherer Betrieb eines Hybridantriebs kann auf diese Weise bereitgestellt werden.

Auch kann ein erfindungsgemäßes Verfahren dahin gehend ausgebildet sein, dass basierend auf der Spannungsvorgabe und/oder der Stromvorgabe ein möglicher Ladungszustand des Traktionsspeichers berechnet wird. Kontrollsysteme, die gemäß dem Stand der Technik zum Ansteuern der Elektromaschine in einem Hybridantrieb vorgesehen sind, basieren insbesondere auf den Drehmomentanforderungen an die Elektromaschine und auf einen Ladungszustand des Traktionsspeichers. Durch eine Berechnung des möglichen Ladungszustands des Traktionsspeichers kann somit bereitgestellt werden, dass bereits bestehende Kontrollsysteme in ein erfindungsgemäßes Verfahren integriert werden können. Eine mögliche Kostenersparnis beim Durchführen eines erfindungsgemäßen Verfahrens kann dadurch erreicht werden.

Gemäß einem zweiten Aspekt der Erfindung wird die Aufgabe gelöst durch ein Fahrzeug mit einem Hybridantrieb, der Hybridantrieb aufweisend einen Verbrennungsmotor und eine Elektromaschine, wobei die Elektromaschine gemäß einer Drehmomentanforderung des Hybridantriebs zumindest in einem Generatorbetrieb und einem Motorbetrieb betreibbar ist, und wobei ferner die Elektromaschine mit einem Traktionsspeicher, der zum Speichern und Bereitstellen elektrischer Energie für die Elektromaschine ausgebildet ist, in einem elektrischen Traktionsnetz elektrisch gekoppelt ist, das mit einem Bordnetz des Fahrzeugs zu einem Gesamtnetz parallel geschaltet ist, und wobei im Bordnetz eine Vielzahl weiterer elektrischer Fahrzeugkomponenten elektrisch gekoppelt ist. Ein erfindungsgemäßes Fahrzeug ist dadurch gekennzeichnet, dass der Hybridantrieb eine Kontrolleinheit zum Ausführen eines Verfahrens nach einem der vorangegangenen Ansprüche zum Betreiben der Elektromaschine aufweist. Dementsprechend bringt ein erfindungsgemäßes Fahrzeug die gleichen Vorteile mit sich, wie sie ausführlich mit Bezug auf ein erfindungsgemäßes Verfahren gemäß dem ersten Aspekt der Erfindung erläutert worden sind.

Besonders bevorzugt kann bei einem erfindungsgemäßen Fahrzeug vorgesehen sein, dass die Elektromaschine ein Startergenerator, insbesondere ein Riemenstartergenerator, ist. Derartige Startergeneratoren bzw. Riemenstartergeneratoren sind dabei besonders geeignete Elektromaschinen, die in einem Generatorbetrieb und einem Motorbetrieb betreibbar sind. Durch einen derartigen Startergenerator kann somit das erfindungsgemäße Fahrzeug sowohl angetrieben werden als auch abgebremst werden, je nachdem, ob der Startergenerator bzw. der Riemenstartergenerator in einem Motorbetrieb betrieben wird und zu einem Vortrieb des Fahrzeugs beiträgt oder einem Generatorbetrieb betrieben wird und aus der Bewegungsenergie des Fahrzeugs elektrische Energie rekuperiert.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Elemente mit gleicher Funktion und Wirkungsweise sind in den einzelnen Figuren mit denselben Bezugszeichen versehen. Es zeigen schematisch:
- Fig. 1: ein erfindungsgemäßes Fahrzeug,
- Fig. 2: ein Gesamtnetz eines erfindungsgemäßen Fahrzeugs,
- Fig. 3: ein möglicher Spannungsverlauf beim Betrieb einer Elektromaschine,
- Fig. 4: ein Ausschnitt eines möglichen Spannungsverlaufs beim Betrieb einer Elektromaschine,
- Fig. 5: ein weiterer Ausschnitt eines möglichen Spannungsverlaufs eines Betriebs einer Elektromaschine,
- Fig. 6: eine Verteilung einer Drehmomentanforderung durch eine Kontrolleinheit, und
- Fig. 7: eine Festlegung einer Spannungsvorgabe und einer Stromvorgabe durch eine Kontrolleinheit.

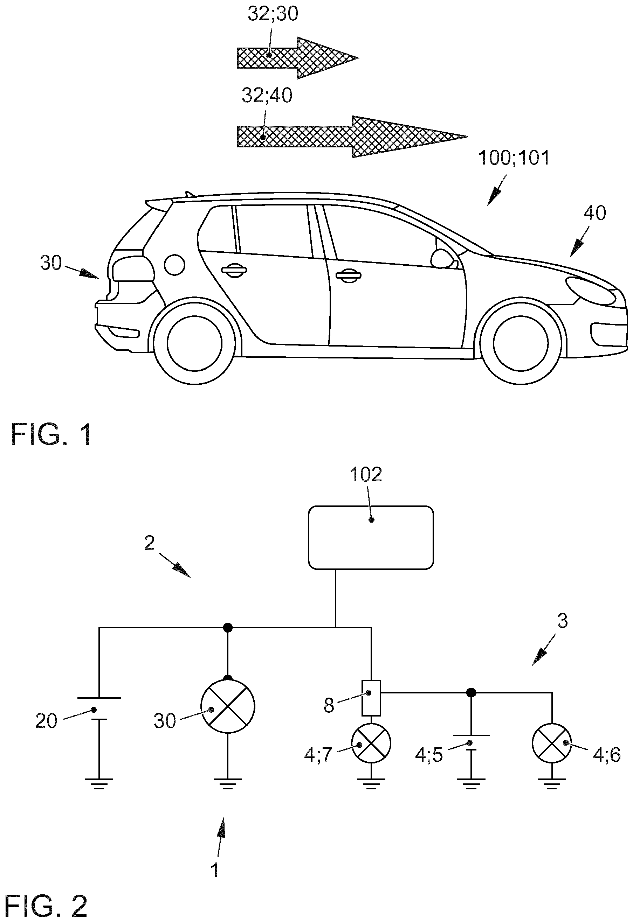

Fig. 1 zeigt ein erfindungsgemäßes Fahrzeug 100, das insbesondere einen Hybridantrieb 101 aufweist. Dieser Hybridantrieb 101 ist dabei insbesondere dadurch gekennzeichnet, dass er einen Verbrennungsmotor 40 und eine Elektromaschine 30 aufweist, die zusammen zum Antreiben des Fahrzeugs 100 verwendet werden können. Dabei ist ebenfalls in Fig. 1 dargestellt, dass dafür an die Elektromaschine 30 und den Verbrennungsmotor 40 jeweils eine Drehmomentanforderung 32 gestellt wird, wodurch insgesamt das Fahrzeug 100 durch die Summe der Drehmomente 31 (nicht mit abgebildet) der Elektromaschine 30 und des Verbrennungsmotors 40 angetrieben werden. Dabei können die Drehmomentanforderungen 32 wie abgebildet gleichgerichtet sein, jedoch können selbstverständlich die Drehmomentanforderungen 32 auch entgegengesetzt gerichtet sein. Dabei wird die Elektromaschine 30 für ein Drehmomentanforderung 32, die eine Beschleunigung des Fahrzeugs 100 in dessen Fahrtrichtung bewirkt, in einem Motorbetrieb und für eine Drehmomentanforderung 32, die eine Abbremsung des Fahrzeugs 100 entgegen dessen Fahrtrichtung bewirkt, in einem Generatorbetrieb betrieben. Eine besonders ausgewogene Verteilung der Drehmomentanforderungen 32 auf die Elektromaschine 30 und den Verbrennungsmotor 40 kann dadurch erreicht werden.

In Fig. 2 ist ein Gesamtnetz 1 eines Fahrzeugs 100 (nicht mit abgebildet) gezeigt, das sich insbesondere aus einem Traktionsnetz 2 und einem Bordnetz 3 zusammensetzt. Das Traktionsnetz 2 und das Bordnetz 3 sind dabei insbesondere über einen Potentialverteiler 8 parallel geschaltet und miteinander gekoppelt. Im Traktionsnetz 2 sind dabei insbesondere eine Elektromaschine 30 und ein Traktionsspeicher 20 angeordnet. Die Elektromaschine 30 kann dabei in einem Generatorbetrieb, in dem sie elektrische Energie erzeugt, und einem Motorbetrieb, in dem sie elektrische Energie verbraucht, betrieben werden, wobei insbesondere durch den Traktionsspeicher 20 die dafür benötigte elektrische Energie aufgenommen bzw. abgegeben wird. Im Bordnetz 3 können verschiedene weitere Fahrzeugkomponenten 4 angeordnet sein, beispielsweise ein Bordnetzspeicher 5, ein Anlasser 6 für den Verbrennungsmotor 40 (nicht mit abgebildet) bzw. jegliche andere Verbraucher 7. Durch die Parallelschaltung des Traktionsnetzes 2 und des Bordnetzes 3 zum Gesamtnetz 1 wirkt sich ein Betrieb der Elektromaschine 30 direkt auf ein Spannungsniveau sowohl im Traktionsnetz 2 als auch im Bordnetz 3 aus. Durch die Verwendung eines erfindungsgemäßen Verfahrens, das insbesondere in einer Kontrolleinheit 102 ausgeführt werden kann, kann dabei verhindert werden, dass bei einem derartigen Betrieb der Elektromaschine 30 eine Sicherheit des Gesamtnetzes 1 und insbesondere auch des Bordnetzes 3 beeinträchtigt werden wird. Durch ein erfindungsgemäßes Verfahren kann insbesondere sichergestellt werden, dass sämtliche Verbraucher 7 des Bordnetzes 3 sicher betrieben werden können, unabhängig von einer Ansteuerung der Elektromaschine 30 im Traktionsnetz 2.

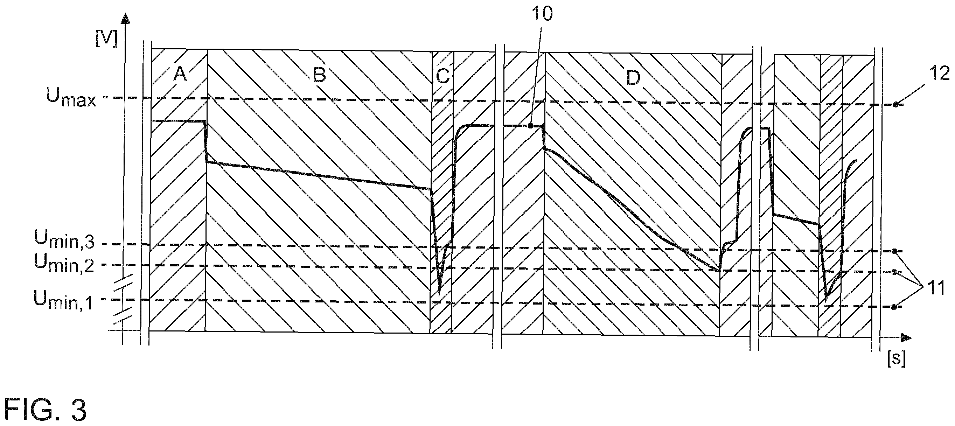

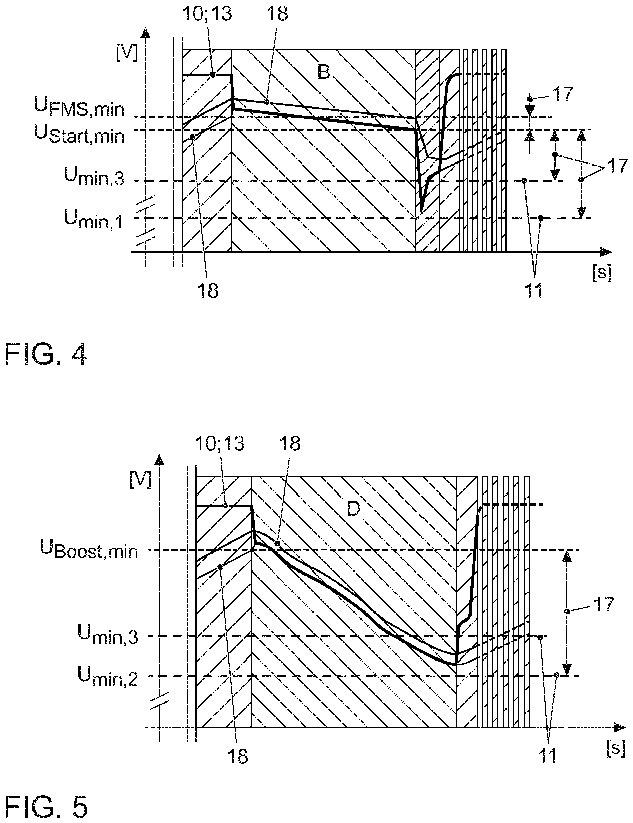

In den Fig. 3, 4 und 5 ist ein möglicher Spannungsverlauf 10 während eines Betriebs einer Elektromaschine 30 (nicht mit abgebildet) gezeigt, wobei die Fig. 4, 5 Detaildarstellungen der Fig. 3 darstellen und daher im Folgenden gemeinsam beschrieben werden. Dabei sind verschiedene mögliche Betriebsmöglichkeiten der Elektromaschine 30 mit den Buchstaben A, B, C und D gekennzeichnet. Der Betriebszustand A ist dabei insbesondere ein Ladebetrieb, in der die Elektromaschine 30 als Generator betrieben wird. Im Betriebszustand B wird insbesondere ein Segelbetrieb des Fahrzeugs 100 (nicht mit abgebildet) durchgeführt, in dem sowohl der Verbrennungsmotor 40 (nicht mit abgebildet) als auch die Elektromaschine 30 deaktiviert sind. Am Ende eines derartigen Segelbetriebs muss entweder der Anlasser 6 (nicht mit abgebildet) oder die Elektromaschine 30 gestartet werden. Dies ist im Betriebszustand C gezeigt und führt insbesondere zu einem Einbruch des Spannungsverlaufs 10. Der letzte gezeigte Betriebszustand D liegt vor, wenn die Elektromaschine 30 in einem Boostbetrieb betrieben wird, in dem die Elektromaschine 30 zusätzlich zum Verbrennungsmotor 40 als Elektromotor betrieben wird und dadurch das Fahrzeug 100 besonders gut beschleunigt werden kann. Bereits in Fig. 3 sind Minimalspannungen 11 gezeigt, die idealerweise vom Spannungsverlauf 10 nicht unterschritten werden sollen. Auch eine Maximalspannung 12, die eine Grenze der möglichen Spannung im Gesamtnetz 1 (nicht mit abgebildet) darstellt, ist mit abgebildet. Die unterschiedlichen Minimalspannungen 11 sind dabei für verschiedene Betriebszustände der Elektromaschine 30 vorgesehen, wobei die unterste Minimalspannung 11 (U min, 1) eine absolute Minimalspannung 11 darstellen. Diese unterste Minimalspannung 11 darf nicht unterschritten werden, um einen sicheren Betrieb des Gesamtnetzes 1 zu jeder Zeit sicherstellen zu können. Die nächsthöhere Minimalspannung 11 ist für einen Boostbetrieb der Elektromaschine 30, wie im Betriebszustand D gezeigt, vorgesehen, die höchste Minimalspannung 11 für einen Generatorbetrieb der Elektromaschine 30, wie im Betriebszustand A gezeigt.

In Fig. 4 ist nun zusätzlich für einen Segelbetrieb (Betriebszustand B) eine Prädiktion 18 des Spannungsverlaufs 10, der durch eine gemessene Spannung 13 abgebildet wird, gezeigt. Dabei ist die höhere Prädiktion 18 ohne Verbraucher 7 im Bordnetz 3 und die untere der beiden Prädiktionen 18 mit möglichen Verbrauchern 7 im Bordnetz 3 berechnet. Deutlich sichtbar ist, dass es im Laufe des Betriebs zu einem Spannungsabfall kommt und dadurch die Prädiktionen 18 abfallen. Zusätzlich zu den bereits beschriebenen Minimalspannungen 11 sind in Fig. 4 Spannungsvorhalte 17 eingezeichnet. Dabei ergeben sich Freigabebedingungen für die verschiedenen Betriebsmöglichkeiten der Elektromaschine 30. Zum einen kann eine Freigabe des Betriebsmodus nur dann erfolgen, wenn der Spannungsverlauf 10 bzw. die gemessene Spannung 13 und auch die Prädiktion 18 oberhalb eines Wertes liegt, der sich als Summe aus einer Minimalspannung 11 und Spannungsvorhalten 17 ergibt (U_{FMS,min}). Ein Abbruch des derzeitigen Betriebsmodus der Elektromaschine 30 erfolgt dann, wenn die gemessene Spannung 13 unterhalb von einem dieser Werte (U_{Start, min}), die sich aus den Minimalspannungen 11 und dem Spannungsvorhalt 17 ergeben, liegt. Dies ist beispielsweise am Ende des Betriebsabschnitts B gezeigt. Dort fällt die gemessene Spannung 13 unterhalb eines der eben ermittelten Werte (U Start, min), wobei in diesem Fall ein Start der Elektromaschine 30 ausgelöst wird, der zu einem Abfall der gemessenen Spannung 13 führt. Durch die Spannungsvorhalte 17 kann dies früh genug eingeleitet werden, so dass dieser Abfall der gemessenen Spannung 13 nicht derart tief erfolgt, dass die unterste Minimalspannung 11 nicht durch die gemessene Spannung 13 unterschritten wird. Ähnliches ist in Fig. 5 für einen Boostbetrieb (Betriebsmodus D) der Elektromaschine 30 gezeigt. Auch hier werden Prädiktionen 18 gezeigt, die sich durch eine Berücksichtigung von Verbrauchern 7 im Bordnetz 3 unterscheiden. Der Spannungsvorhalt 17 in diesem Fall berücksichtigt insbesondere, dass während des Boostbetriebs durch die Elektromaschine 30 eine große elektrische Leistung verbraucht wird, wodurch sich ein großer Abfall der gemessenen Spannung 13 ergibt. Der Spannungsvorhalt 17 ist in diesem Fall derart groß gewählt, dass dieser Boostbetrieb über eine genügend lange Zeit aufrechterhalten werden kann. Ein zu kurzer Boostbetrieb, der insbesondere für einen Benutzer des Fahrzeugs 100 als ungenügend empfunden werden kann, kann dadurch vermieden werden.

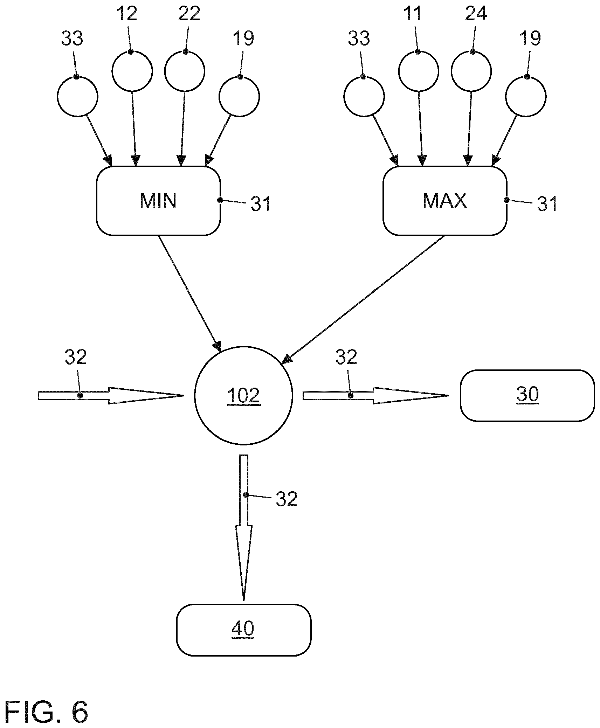

Fig. 6 zeigt eine Kontrolleinheit 102, in der Drehmomentanforderungen 32 verteilt werden. Eine Drehmomentanforderung 32 wird dabei in zwei Drehmomentanforderungen 32 aufgeteilt, die an die Elektromaschine 30 und den Verbrennungsmotor 40 verteilt werden. Dabei wird insbesondere berücksichtigt, dass ein durch die Elektromaschine 30 bereitstellbares Drehmoment 31 nur zwischen einem minimalen und einem maximalen bereitstellbaren Drehmoment 31 ausgewählt werden kann. Dabei werden zur Ermittlung des minimalen bereitstellbaren Drehmoments 31, das ebenfalls durch die Kontrolleinheit 102 ermittelt wird, Betriebsgrößen der Elektromaschine 30 verwendet. Insbesondere kann dabei eine Drehzahl 30 als mechanische Grenze der Elektromaschine 30 berücksichtigt werden. Als elektrische Größen gehen in die Berechnung des minimalen Drehmoments 31 insbesondere eine Maximalspannung 12, ein maximaler Ladestrom 22 und mögliche Verluste 19, insbesondere im Traktionsnetz 2 (nicht mit abgebildet) ein. Auch bei der Ermittlung eines maximal bereitstellbaren Drehmoments 31 werden wiederum Betriebsgrößen der Elektromaschine 30 berücksichtigt. Insbesondere wird auch hier eine Drehzahl 33 als mechanische Grenze der Elektromaschine 30 mit einbezogen. Als elektrische Größen werden für die Ermittlung des maximal bereitstellbaren Drehmoments 31 insbesondere eine einzuhaltende Minimalspannung 11, ein maximaler Entladestrom 24 und wiederum mögliche Verluste 19 berücksichtigt. Durch diese Berücksichtigung von Betriebsgrößen der Elektromaschine 30 bei der Ermittlung des minimalen bzw. maximalen bereitstellbaren Drehmoments 31, und insbesondere durch die Berücksichtigung dieser Grenzen der bereitstellbaren Drehmomente 31, kann bei der Verteilung der Drehmomentanforderung 32 durch die Kontrolleinheit 102 sichergestellt werden, dass zum einen an die Elektromaschine 30 keine Drehmomentanforderungen 32 übermittelt werden, die diese nicht erfüllen kann, und zum anderen, dass auch das elektrische Gesamtsystem, insbesondere das Gesamtnetz 1 (nicht mit abgebildet), das durch eine Parallelschaltung des Traktionsnetzes 2 und eines Bordnetzes 3 (jeweils nicht mit abgebildet) erzeugt ist, sichergestellt werden kann. Verbraucher 7 (nicht mit abgebildet) im Gesamtnetz 1, insbesondere im Bordnetz 3, können jederzeit betrieben werden, ohne dass eine Drehmomentanforderung 32 an die Elektromaschine 30 eine Beeinträchtigung eines Betriebs dieser Verbraucher 7 bewirken könnte.

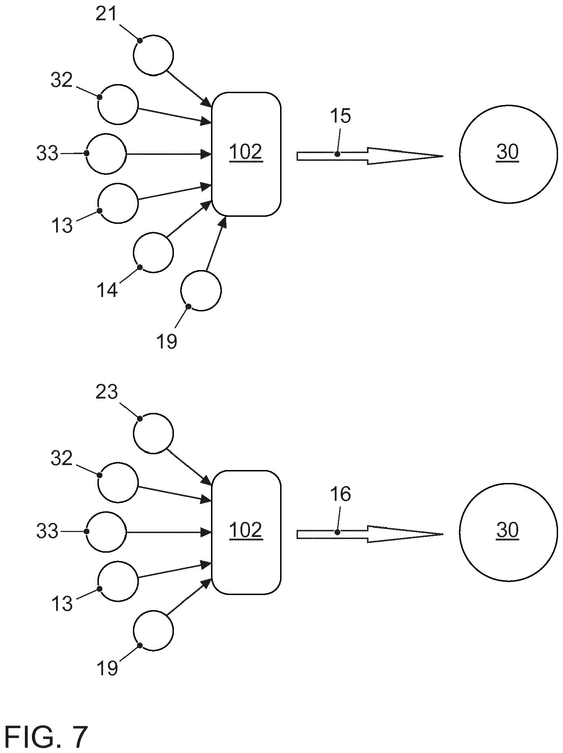

Fig. 7 zeigt abschließend eine Ermittlung einer Spannungsvorgabe 15 bzw. einer Stromvorgabe 16 durch die Kontrolleinheit 102. Dabei wird die Spannungsvorgabe 15 verwendet, um die Elektromaschine 30 in einem Generatorbetrieb zu betreiben und die Stromvorgabe 16 dazu verwendet, die Elektromaschine 30 in einem Motorbetrieb zu betreiben. Als Eingangsgrößen zur Ermittlung der Spannungsvorgabe 15 werden dabei insbesondere ein Ladekennfeld 21 des Traktionsspeichers 20 (nicht mit abgebildet), eine Drehmomentanforderung 32 und eine Drehzahl 33 sowie eine gemessene Spannung 13, ein gemessener Strom 14 und mögliche elektrische Verluste 19 verwendet. Analog dazu wird zur Ermittlung der Stromvorgabe 16 ein Entladekennfeld 23 des Traktionsspeichers 20, ebenfalls eine Drehmomentanforderung 32 an eine Drehzahl 33 der Elektromaschine 30 sowie eine gemessene Spannung 13 und mögliche elektrische Verluste 19 verwendet. Durch die Berücksichtigung der vorhandenen elektrischen Größen im Traktionsnetz 2 (nicht mit abgebildet) kann insbesondere eine aktuelle Betriebssituation der Elektromaschine 30 bzw. des Traktionsnetzes 2 berücksichtigt werden. Insbesondere kann durch die Ansteuerung der Elektromaschine 30 durch eine Spannungsvorgabe 15 bzw. eine Stromvorgabe 16 eine Ansteuerung dieser Elektromaschine 30 direkt durch elektrische Größen bereitgestellt werden. Eine besonders direkte Ansteuerung, im Gegensatz zu einer Steuerung über nur eine Drehmomentanforderung 32 (nicht mit abgebildet) und einem Ladungszustand 25, kann dadurch bereitgestellt werden.

### Bezugszeichenliste

- 1: Gesamtnetz
- 2: Traktionsnetz
- 3: Bordnetz
- 4: Fahrzeugkomponente
- 5: Bordnetzspeicher
- 6: Anlasser
- 7: Verbraucher
- 8: Potentialverteiler
- 10: Spannungsverlauf
- 11: Minimalspannung
- 12: Maximalspannung
- 13: gemessene Spannung
- 14: gemessener Strom
- 15: Spannungsvorgabe
- 16: Stromvorgabe
- 17: Spannungsvorhalt
- 18: Prädiktion
- 19: Verluste
- 20: Traktionsspeicher
- 21: Ladekennfeld
- 22: Ladestrom
- 23: Entladekennfeld
- 24: Entladestrom
- 25: Ladungszustand
- 30: Elektromaschine
- 31: Drehmoment
- 32: Drehmomentanforderung
- 33: Drehzahl
- 40: Verbrennungsmotor
- 100: Fahrzeug
- 101: Hybridantrieb
- 102: Kontrolleinheit

## Patentansprüche

1. Verfahren zum Betreiben eines Hybridantriebs (101) eines Fahrzeugs (100), der Hybridantrieb (101) aufweisend einen Verbrennungsmotor (40) und eine Elektromaschine (30), wobei die Elektromaschine (30) gemäß einer Drehmomentanforderung (32) des Hybridantriebs (101) zumindest in einem Generatorbetrieb und einem Motorbetrieb betrieben wird, wobei ferner die Elektromaschine (30) mit einem Traktionsspeicher (20), der zum Speichern und Bereitstellen elektrischer Energie für die Elektromaschine (30) ausgebildet ist, in einem elektrischen Traktionsnetz (2) elektrisch gekoppelt ist, wobei ferner das Traktionsnetz (2) mit einem Bordnetz (3) des Fahrzeugs (100) direkt parallel zu einem Gesamtnetz (1) geschaltet ist, und wobei im Bordnetz (3) eine Vielzahl weiterer elektrischer Fahrzeugkomponenten (4) elektrisch gekoppelt sind,
wobei durch eine Kontrolleinheit (102) des Hybridantriebs (101) ein durch die Elektromaschine (30) im Generatorbetrieb bereitstellbares minimales und im Motorbetrieb bereitstellbares maximales Drehmoment (31) ermittelt wird, dass für den Generatorbetrieb durch die Kontrolleinheit (102) die Elektromaschine (30) zur Erfüllung der Drehmomentanforderung (32) basierend auf einer Spannungsvorgabe (15) für das Gesamtnetz (1) betrieben wird und dass für den Motorbetrieb durch die Kontrolleinheit (102) die Elektromaschine (30) zur Erfüllung der Drehmomentanforderung (32) basierend auf einer Stromvorgabe (16) des in der Elektromaschine (30) verbrauchten Stroms betrieben wird, wobei ferner jeweils das ermittelte durch die Elektromaschine (30) bereitstellbare minimale und/oder maximale Drehmoment (31) berücksichtigt wird,
**dadurch gekennzeichnet,**
**dass** der Hybridantrieb (101) durch die Kontrolleinheit (102) in verschiedenen Betriebsstrategien, insbesondere in einem Segelbetrieb und/oder in einem Boostbetrieb, betrieben wird, wobei eine Freigabe der Betriebsstrategien basierend auf einer Prädiktion (18) eines Spannungsverlaufs (10) im Gesamtnetz (1), insbesondere anhand von das Gesamtnetz (1) beschreibenden elektrischen Größen, vorgenommen wird.

2. Verfahren nach Anspruch 1,
**dadurch gekennzeichnet,**
**dass** die Spannungsvorgabe (15) unter Berücksichtigung zumindest einer der folgenden Größen festgelegt wird:
- Maximalspannung (12)
- Minimalspannung (11)
- Maximaler Ladestrom (22)
- gemessene Spannung (13)
- gemessener Strom (14)
- Ladungszustand (25) des Traktionsspeichers (20)
- Drehmomentanforderung (32) an die Elektromaschine (30), insbesondere aufgrund eines Ladebedarfs des Traktionsspeichers (20)
- Drehzahl (33) der Elektromaschine (30)

3. Verfahren nach Anspruch 1 oder 2,
**dadurch gekennzeichnet,**
**dass** die Stromvorgabe (16) unter Berücksichtigung zumindest einer der folgenden Größen festgelegt wird:
- gemessene Spannung (13)
- Minimalspannung (11)
- Maximaler Entladestrom (24)
- Entladekennfeld (23) des Traktionsspeichers (20)
- Ladungszustand (25) des Traktionsspeichers (20)
- Drehmomentanforderung (32) an die Elektromaschine (30), insbesondere aufgrund einer Entladeanforderung an den Traktionsspeicher (20)
- Drehzahl (33) der Elektromaschine (30)
- Temperatur der Elektromaschine (30)

4. Verfahren nach einem der vorangegangenen Ansprüche,
**dadurch gekennzeichnet,**
**dass** für eine Ermittlung des durch die zumindest eine Elektromaschine (30) bereitstellbaren minimalen und/oder maximalen Drehmoments (31) zumindest eine der folgenden Größen verwendet wird:
- Maximalspannung (12)
- Minimalspannung (11)
- Maximaler Ladestrom (22)
- Maximaler Entladestrom (24)
- gemessene Spannung (13)
- Drehzahl (33) der Elektromaschine (30)

5. Verfahren nach einem der vorangegangenen Ansprüche,
**dadurch gekennzeichnet,**
**dass** bei einer Freigabe der Betriebsstrategien die Prädiktion (18) des Spannungsverlaufs (10) mit einem auf die jeweilige Betriebsstrategie angepassten Spannungsvorhalt (17) verglichen wird.

6. Verfahren nach einem der vorangegangenen Ansprüche,
**dadurch gekennzeichnet,**
**dass** eine Verteilung der Drehmomentanforderung (32) auf den Verbrennungsmotor (40) und die Elektromaschine (30) vorgenommen wird, wobei das durch die zumindest eine Elektromaschine (30) bereitstellbare minimale und/oder maximale Drehmoment (31) berücksichtigt werden.

7. Verfahren nach einem der vorangegangenen Ansprüche,
**dadurch gekennzeichnet,**
**dass** basierend auf der Spannungsvorgabe (15) und/oder der Stromvorgabe (16) ein möglicher Ladungszustand (25) des Traktionsspeichers (20) berechnet wird.

8. Fahrzeug (100) mit einem Hybridantrieb (101), der Hybridantrieb (101) aufweisend einen Verbrennungsmotor (40) und eine Elektromaschine (30), wobei die Elektromaschine (30) gemäß einer Drehmomentanforderung (32) des Hybridantriebs (101) zumindest in einem Generatorbetrieb und einem Motorbetrieb betreibbar ist, und wobei ferner die Elektromaschine (30) mit einem Traktionsspeicher (20), der zum Speichern und Bereitstellen elektrischer Energie für die Elektromaschine (30) ausgebildet ist, in einem elektrischen Traktionsnetz (2) elektrisch gekoppelt ist, das mit einem Bordnetz (3) des Fahrzeugs (100) direkt parallel zu einem Gesamtnetz (1) geschaltet ist, und wobei im Bordnetz (3) eine Vielzahl weiterer elektrischer Fahrzeugkomponenten (4) elektrisch gekoppelt sind,
**dadurch gekennzeichnet,**
**dass** der Hybridantrieb (101) eine Kontrolleinheit (102) zum Ausführen eines Verfahrens nach einem der vorangegangenen Ansprüche zum Betreiben des Hybridantriebs (101) aufweist.

9. Fahrzeug (100) nach Anspruch 8,
**dadurch gekennzeichnet,**
**dass** die Elektromaschine (30) ein Startergenerator, insbesondere ein Riemenstartergenerator, ist.

## Claims

1. Method for operating a hybrid drive (101) of a vehicle (100), the hybrid drive (101) comprising an internal combustion engine (40) and an electric machine (30), wherein, upon receiving a torque request (32) from the hybrid drive (101), the electric machine (30) is operated at least in generator mode and engine mode, wherein the electric machine (30) further comprises a traction memory (20), which is designed to store and provide electrical energy for the electric machine (30), and which is electrically coupled to an electrical traction network (2),
wherein the traction network (2) is connected directly in parallel to an overall network (1) via a wiring system (3) of the vehicle (100), and wherein a plurality of electrical vehicle components (4) are electrically coupled in the wiring system (3),
wherein a minimum torque in generator operation and a maximum torque (31) in engine operation is determined by a control unit (102) of the hybrid drive (101) and provided through the electric machine (30), wherein, for generator operation through the control unit (102), the electric machine (30) is operated to meet the torque request (32) based on a default voltage (15) for the overall network (1), and wherein for engine operation through the control unit (102), the electric machine (30) is operated to meet the torque request (32) based on a current setting (16) of the current consumed in the electric machine (30), wherein, furthermore, the respectively determined minimum and/or maximum torque (31) that can be provided by the electric machine (30), is taken into account,
**characterized in that**
the hybrid drive (101) is operated though the control unit (102) in different operating strategies, in particular in standard mode and/or in boost mode, wherein implementation of the operating strategies based, in particular, on a prediction (18) of a voltage profile (10) in the overall network (1), is effected based on the electrical variables described in the overall network (1).

2. Method according to claim 1, **characterized in that** the voltage specification (15) is determined taking into account at least one of the following variables:
- maximum voltage (12)
- minimum voltage (11)
- maximum charging current (22)
- measured voltage (13)
- measured current (14)
- charge state (25) of the traction memory (20)
- torque request (32) to the electric machine (30), in particular due to a charge request of the traction memory (20)
- speed (33) of the electric machine (30)

3. Method according to claim 1 or 2, **characterized in that** the current setting (16) is determined taking into account at least one of the following variables:
- measured voltage (13)
- minimum voltage (11)
- maximum discharge current (24)
- discharge state (23) of the traction storage (20)
- charge state (25) of the traction memory (20)
- torque request (32) to the electric machine (30), in particular due to a discharge request to the traction memory (20)
- speed (33) of the electric machine (30)
- temperature of the electric machine (30)

4. Method according to any one of the preceding claims, **characterized in that** at least one of the following variables is used to determine the minimum and/or maximum torque (31) that may be provided by the at least one electric machine (30):
- maximum voltage (12)
- minimum voltage (11)
- maximum charge current (22)
- maximum discharge current (24)
- measured voltage (13)
- speed (33) of the electric machine (30)

5. Method according to any one of the preceding claims, **characterized in that** when the operating strategies are implemented, the prediction (18) of the voltage profile (10) is compared with a default voltage (17) adapted to the respective operating strategy.

6. Method according to any one of the preceding claims, **characterized in that** transmission of the torque request (32) to the engine (40) and the electric machine (30) is carried out taking into account the minimum and/or maximum torque (31) which may be provided by the at least one electric machine (30).

7. Method according to any one of the preceding claims, **characterized in that** a possible charge state (25) of the traction memory (20) is calculated based on the voltage setting (15) and/or the current setting (16).

8. Vehicle (100) with a hybrid drive (101), wherein the hybrid drive (101) comprises an engine (40) and an electric machine (30), wherein, according to a torque request (32) from the hybrid drive (101), the electric machine (30) is operable at least in generator operation and engine operation, and wherein, furthermore, the electric machine (30) is electrically coupled to a traction memory (20), which is designed to store and provide electrical energy for the electric machine (30) in an electric traction network (2), wherein an electrical system (3) of the vehicle (100) is connected directly in parallel to an overall network (1), and wherein a plurality of further electrical vehicle components (4) are electrically coupled to the electrical system (3),
**characterized in that**
the hybrid drive (101) has a control unit (102) for implementing a method according to one of the preceding claims for operating the hybrid drive (101).

9. Vehicle (100) according to claim 8, **characterized in that** the electric machine (30) is a starter generator, in particular a belt starter generator.

## Revendications

1. Procédé de commande de l'entraînement hybride (101) d'un véhicule (100), l'entraînement hybride (101) comprenant un moteur à combustion (40) et une machine électrique (30), la machine électrique (30) étant utilisée selon l'exigence de couple (32) de l'entraînement hybride (101) au moins dans un mode générateur et un mode moteur, la machine électrique (30) étant en outre couplée électriquement avec un accumulateur de traction (20), qui est conçue pour l'accumulation et la mise à disposition d'énergie électrique pour la machine électrique (30), dans un réseau de traction électrique (2), le réseau de traction (2) étant en outre branché avec un réseau embarqué (3) du véhicule (100) de manière directement parallèle à un réseau global (1) et, dans le réseau embarqué (3), une pluralité d'autres composants électriques du véhicule (4) étant couplés électriquement,
une unité de contrôle (102) de l'entraînement hybride (101) déterminant un couple (31) minimal pouvant être mis à disposition en mode générateur et maximal pouvant être mise à disposition en mode moteur, par la machine électrique (30), de façon à ce que, pour le mode générateur, à l'aide de l'unité de contrôle (102), la machine électrique (30) soit contrôlée pour le respect de l'exigence de couple (32) sur la base d'une directive de tension (15) pour le réseau global (1) et de façon à ce que, pour mode moteur, à l'aide de l'unité de contrôle (102), la machine électrique (30) soit contrôlée pour le respect de l'exigence de couple (32) sur la base d'une directive de courant (16) du courant consommé dans la machine électrique (30), le couple minimal et/ou maximal (31) déterminé pouvant être mis à disposition par la machine électrique (30) étant en outre pris en compte,
**caractérisé en ce que**
l'entraînement hybride (101) est contrôlé par l'unité de contrôle (102) dans différentes stratégies de contrôle, plus particulièrement en mode roue libre et/ou en mode boost, une validation des stratégies de commande étant effectuée sur la base d'une prédiction (18) d'un tracé de tension (10) dans le réseau global (1), plus particulièrement à l'aide de grandeurs électrique décrivant le réseau global (1).

2. Procédé selon la revendication 1
**caractérisé en ce que**
la directive de tension (15) est déterminée en tenant compte d'au moins une des grandeurs suivantes :
- tension maximale (12)
- tension minimale (11)
- courant de charge maximal (22)
- tension mesurée (13)
- courant mesuré (14)
- état de charge (25) de l'accumulateur de traction (20)
- exigence de couple (32) pour la machine électrique (30), plus particulièrement sur la base d'un besoin de charge de l'accumulateur de traction (20)
- vitesse de rotation (33) de la machine électrique (30).

3. Procédé selon la revendication 1 ou 2
**caractérisé en ce que**
la directive de courant (16) est déterminée en tenant compte d'au moins une des grandeurs suivantes :
- tension mesurée (13)
- tension minimale (11)
- courant de décharge maximal (24)
- champ caractéristique de décharge (23) de l'accumulateur de traction (20)
- état de charge (25) de l'accumulateur de traction (20)
- exigence de couple (32) pour la machine électrique (30), plus particulièrement sur la base d'une exigence de décharge pour l'accumulateur de traction (20)
- vitesse de rotation (33) de la machine électrique (30)
- température de la machine électrique (30)

4. Procédé selon l'une des revendications précédentes,
**caractérisé en ce que**
pour une détermination du couple (31) minimal et/ou maximal pouvant être mis à disposition par l'au moins une machine électrique (30), au moins une des grandeurs suivantes est utilisée :
- tension maximale (12)
- tension minimale (11)
- courant de charge maximal (22)
- courant de décharge maximal (24)
- tension mesurée (13)
- vitesse de rotation (33) de la machine électrique (30).

5. Procédé selon l'une des revendications précédentes,
**caractérisé en ce que**
lors d'une validation des stratégies de contrôle, la prédiction (18) du tracé de tension (10) est comparée avec un comportement de la tension (17) adapté à la stratégie de contrôle correspondante.

6. Procédé selon l'une des revendications précédentes,
**caractérisé en ce que**
une répartition de l'exigence de couple (32) est effectuée sur le moteur à combustion (40) et la machine électrique (30), le couple (31) minimal et/ou maximal pouvant être mis à disposition par l'au moins une machine électrique (30) étant pris en compte.

7. Procédé selon l'une des revendications précédentes,
**caractérisé en ce que**
sur la base de la directive de tension (15) et/ou de la directive de courant (16), un état de charge (25) possible de l'accumulateur de traction (20) est calculé.

8. Véhicule (100) avec un entraînement hybride (101), cet entraînement hybride (101) comprenant un moteur à combustion (40) et une machine électrique (30), la machine électrique (30) pouvant être utilisée selon une exigence de couple (32) de l'entraînement hybride (101) au moins dans un mode générateur et dans un mode moteur, la machine électrique (30) étant en outre couplée électriquement avec un accumulateur de traction (20), qui est conçu pour l'accumulation et la mise à disposition d'énergie électrique pour la machine électrique (30), dans un réseau de traction électrique (2), le réseau de traction (2) étant en outre branché avec un réseau embarqué (3) du véhicule (100) de manière directement parallèle à un réseau global (1) et, dans le réseau embarqué (3), une pluralité d'autres composants électriques du véhicule (4) étant couplés électriquement,
**caractérisé en ce que**
l'entraînement hybride (101) comprend une unité de contrôle (102) pour l'exécution d'un procédé selon l'une des revendications précédentes pour le contrôle de l'entraînement hybride (101).

9. Véhicule (100) selon la revendication 8,
**caractérisé en ce que**
la machine électrique (30) est un générateur de démarrage, plus particulièrement un générateur de démarrage à courroie.
